# EUROPEAN PATENT APPLICATION

(11) **EP 1 164 463 A1**
(43) Date of publication of application: **19.12.2001**
(21) Application number: 99959885.7
(22) Date of filing: 17.12.1999
(51) Int. Cl.: G06F 3/02, H01H 13/20, H01H 13/70

(54) **KEYBOARD SWITCH**

(71) Applicant: SMK Corporation, Tokyo 142-8511 (JP)
(72) Inventor: KAMISHIMA, Osamu, Toyama Works SMK Corporation, Nei-gun, Toyama 929-2366 (JP)
(74) Representative: Quintelier, Claude
(86) International application number: PCT/JP99/07109
(87) International publication number: WO 01/44917

(57) **Abstract**

Any one of a switch sheet (3) and a support plate (18) is slid from a stand-by position to a retracted position in response to a closing operation of a lid (29). At the retracted position, part of a return spring (24) is accommodated inside a retracting hole (17) that is formed on a switch sheet (3). Even when the gap between a key top (2) and the switch sheet (3) becomes narrower by lowering the key top (2) upon closing the lid (29), part of the return spring (24) is retracted into the switch sheet (3), thereby allowing the return spring (24) to be retracted without being elastically deformed.

## Description

### BACKGROUND OF THE INVENTION

### 1. Field of the Invention

The present invention relates to keyboard switches for use in a notebook personal computer including a lid housing for covering the key tops thereof. More particularly, it relates to keyboard switches in which key tops are lowered to a storage orientation when the lid housing is closed.

### 2. Description of the Related Art

Conventionally known are such keyboard switches with key tops that lower to a storage orientation.

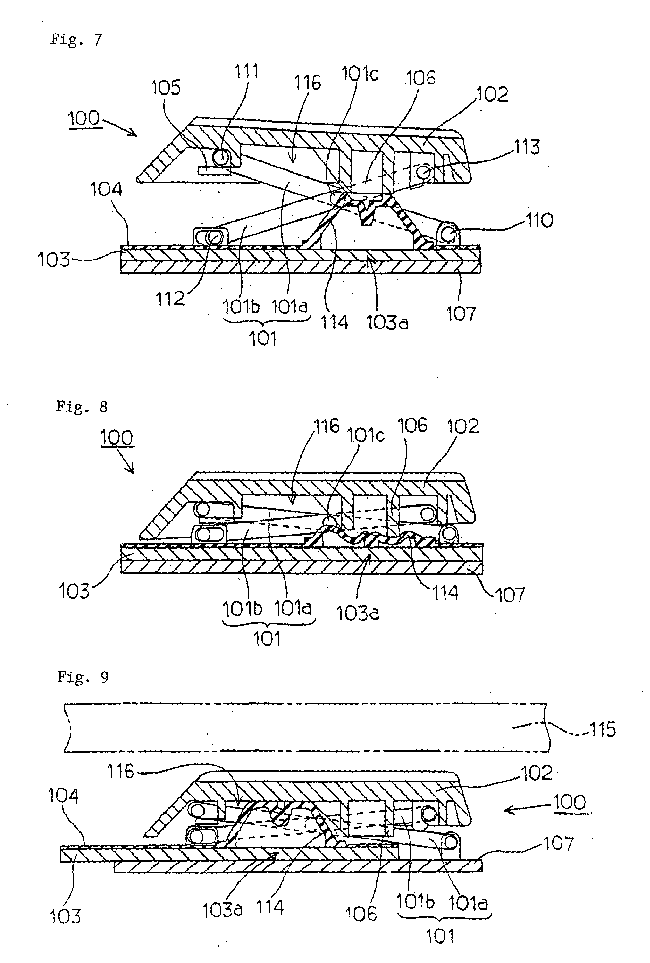

Figs.7 to 9 show the main portion of the prior-art keyboard switch 100 which is provided with a cross-link 101 including a first link member 101a and a second link member 101b between a support plate 107 for supporting a plurality of key tops 102 and each of the key tops 102.

The first link member 101a and the second link member 101b each are formed in the shape of a Japanese character "KO", being pivotally coupled to each other at intermediate pivot points 101c. As shown in Fig.7, one end of the first link member 101a at the support plate 107 side is a hinged end portion 110 having a pin pivotally anchored to a support projection from the support plate 107. On the other hand, the other end at the key top 102 side engages a guide portion 105 provided on the underside of the key top 102, being a slidable end portion 111 which is thereby made slidable in a left-to-right direction and pivotable. In addition, one end of the second link member 101b at the support plate 107 side is a slidable end portion 112 having a pin pivotally anchored to an engagement long hole. On the other hand, the other end at the key top 102 side is a hinged end portion 113 coupled pivotally to the underside of the key top 102.

In a stand-by position, shown in Fig.7, in which the key top 102 is not depressed, there is disposed, under the key top 102, a dome-shaped rubber elastic portion 114 that serves as a return spring and is in contact with the underside of a depressing portion 106 provided perpendicularly to the bottom side of the key top 102.

The dome-shaped rubber elastic portion 114 is formed integrally with a rubber sheet 104 stacked on a switch sheet 103. There is also formed a membrane switch portion 103a in a switch sheet 103, which is disposed further underneath the dome-shaped rubber elastic portion 114. The rubber sheet 104 and the switch sheet 103 are adapted to be slidable in one piece on the support plate 107.

Depressing the key top 102 from the above causes the key top 102 to be guided by the cross-link 101 and lowered generally in a parallel orientation without being significantly inclined. Consequently, as shown in Fig.8, the depressing portion 106 of the key top 102 deforms the dome-shaped rubber elastic portion 114 to actuate the membrane switch portion 103a.

A unit case to which the keyboard switches are mounted is connected rotatably with a lid 115 that covers the whole of the plurality of key tops 102. As shown in Fig.9, when the lid 115 is closed, the rubber sheet 104 and the switch sheet 103 are caused to slide leftwards in the figure, in response to the closing, relative to the support plate 107 supporting the key top 102. At the same time, the dome-shaped rubber elastic portion 114 is retracted into a storage recessed portion 116 under the key top 102. When the dome-shaped rubber elastic portion 114 is retracted, the key top 102 and the cross-link 101 drop due to their own weights and are provided with a low profile. On the other hand, even when the key top 102 has dropped, the membrane switch portion 103a is not actuated.

As such, when the lid 115 is closed, retracting the dome-shaped rubber elastic portion 114 into the storage recessed portion 116 of the key top 102 will not cause the return spring or the dome-shaped rubber elastic portion 114 to be kept deformed for a long time during which the notebook personal computer is not in service. In addition, it is made possible to make the notebook personal computer smaller in thickness with the lid 115 being closed.

However, in such a keyboard switch as described above, when the lid 115 is closed, the return spring (dome-shaped rubber elastic portion) 114 is only retracted into a position (the storage recessed portion) 116 to avoid interference with the depressing portion 106 of the key top 102. Accordingly, the distance between the support plate 107 and the key top 102 cannot be made less than the free-state height of the dome-shaped rubber elastic portion 114, which has prevented the personal computer from being made thinner.

Furthermore, forming the depressing portion 106 and the storage recessed portion 116 on the bottom side of the key top 102 causes the key top 102 to become larger and the entire keyboard switch 100 to become correspondingly larger. In addition, retracting the return spring 114 to the storage recessed portion 116 or the retracted position will require sliding for a long distance, causing a mechanism in cooperation with the lid 115 to become larger and complicated.

Furthermore, sliding in one piece the rubber sheet 104 having the return spring 114 integrated therewith and the switch sheet 103 as a whole would require a relatively large force. Such a keyboard switch is also known as allows only the rubber sheet 104 provided with the return spring 114 to slide relative to the switch sheet 103. However, the keyboard switch of this type would cause the membrane switch portion 103a of the switch sheet 103 to possibly malfunction. In addition, it is required to interpose a sheet such as a polyester sheet between the rubber sheet 104 and the switch sheet 103 to avoid friction therebetween, thus resulting in an increase in cost.

### SUMMARY OF THE INVENTION

The present invention has been developed in view of the prior-art problems. An object of the present invention is to provide a keyboard switch that can be made thinner without compressing its return spring when the lid is closed.

Another object of the present invention is to provide a keyboard switch that allows the return spring to move to a retracted position in a simple configuration and the lid to be opened and closed with a small operational force.

A keyboard switch according to the present invention includes a support plate accommodated inside a device case; a cross-link, mounted between support projections of the support plate and a key top, for guiding the key top freely up and down; a switch sheet, arranged slidably on the support plate to avoid colliding with the support projections, and provided with a switch portion, formed thereon and actuated by the key top lowered; a return spring, attached integrally to the key top or the cross-link, in contact with the switch sheet, for returning the lowered key top upwardly; and an interlock mechanism for sliding relatively one of the switch sheet and the support plate relative to the other from a stand-by position to a retracted position in response to a closing operation of a lid covering the key top and for sustaining the key top in a lowered state. The keyboard switch slides the switch portion actuated by lowering the key top at the stand-by position to the retracted position where the switch portion is not actuated by lowering the key top.

The keyboard switch is characterised in that, at the retracted position, a retracting hole is formed at a portion of the switch sheet with which the return spring is in contact, and part of the return spring is accommodated inside the retracting hole.

At the stand-by position, depressing the key top causes the key top to be lowered to actuate the switch portion. Releasing the depression causes the key top to be pushed upwardly by the return spring and thereby the actuation of the switch portion to be released.

Closing the lid causes the switch portion to slide relative to the retracted position, thereby preventing the switch portion from being actuated even when the key top is lowered along with the closing operation. In addition, part of the return spring drops into the retracting hole of the switch sheet to be accommodated therein. The return spring can be kept at the stand-by position even when the contact position is lowered and the key top is lowered.

Furthermore, the keyboard switch may be configured such that engagement holes into which trailing claw pieces integrally provided on the cross-link are inserted are formed on the switch sheet, and when one of the switch sheet and the support plate slides to the retracted position, peripheral edges of the engagement holes moving relatively are brought into contact with the trailing claw pieces to cause the cross-link to submerge and the key top to be lowered.

Movement of the switch sheet or the support plate from the stand-by position to the retracted position causes the peripheral edges of the engagement holes to be brought into contact with the trailing claw pieces, the cross-link to submerge, and the key top to be lowered. Accordingly, the interlock mechanism for allowing the key top to be lowered can be constructed only by forming the switch sheet and the cross-link.

Furthermore, the keyboard switch may be configured such that the return spring is an elongated plate spring supported in a cantilever manner by means of the key top or the cross-link, and a free end of the return spring located at the stand-by position presses the switch portion of the switch sheet by lowering the key top to actuate the switch portion.

The return spring also serves as an actuator for pressing and actuating the switch portion, thereby reducing the number of parts used and simplifying the structure of the keyboard switch. An actuator is not placed on the return spring even at the stand-by position, thus allowing the keyboard switch to be made smaller in thickness.

Furthermore, the keyboard switch may be adapted to allow, the switch sheet to slide between the stand-by position and the retracted position relative to the support plate along with the opening or closing the lid.

The switch sheet can be slid with a small operational force from the stand-by position to the retracted position since only a switch portion is provided thereon.

Still furthermore, in the keyboard switch, slits having the sliding direction as the longitudinal direction may be formed on the switch sheet to loosely fit the support projections of the support plate into the slits to allow the switch sheet to be guided to slide by means of the support projections.

The switch sheet is guided in the direction of sliding without an additional guide members by the support projections that are loosely fit into the slits.

The nature, principle, and utility of the invention will become more apparent from the following detailed description when read in conjunction with the accompanying drawings in which like parts are designated by like reference numerals.

### BRIEF DESCRIPTION OF THE DRAWINGS

In the accompanying drawings
Fig.1 is a cross-sectional view of the main portion of a key switch 10 in a stand-by position of a keyboard switch 1 according to an embodiment of the present invention;
Fig.2 is a cross-sectional view of the main portion of the key switch 10 with a key top 2 being depressed from the stand-by position of Fig.1;
Fig.3 is a cross-sectional view of the main portion of the key switch 10 in a retracted position;
Fig.4 is an exploded perspective view showing the components of the key switch 10;
Fig.5 is a plan view of the keyboard switch 1 with a lid 29 being opened;
Fig.6 is an enlarged plan view of the main portion of the interlocking mechanism of Fig.5;
Fig.7 is a cross-sectional view showing a prior-art keyboard switch 100 in which the main portion of the keyboard switch 100 in a stand-by position;
Fig.8 is a cross-sectional view showing the main portion of the keyboard switch 100 with a key top 102 being depressed from the stand-by position; and
Fig.9 is a cross-sectional view showing the main portion of the keyboard switch 100 in a retracted position.

### DETAILED DESCRIPTION OF THE PREFERRED EMBODIMENTS

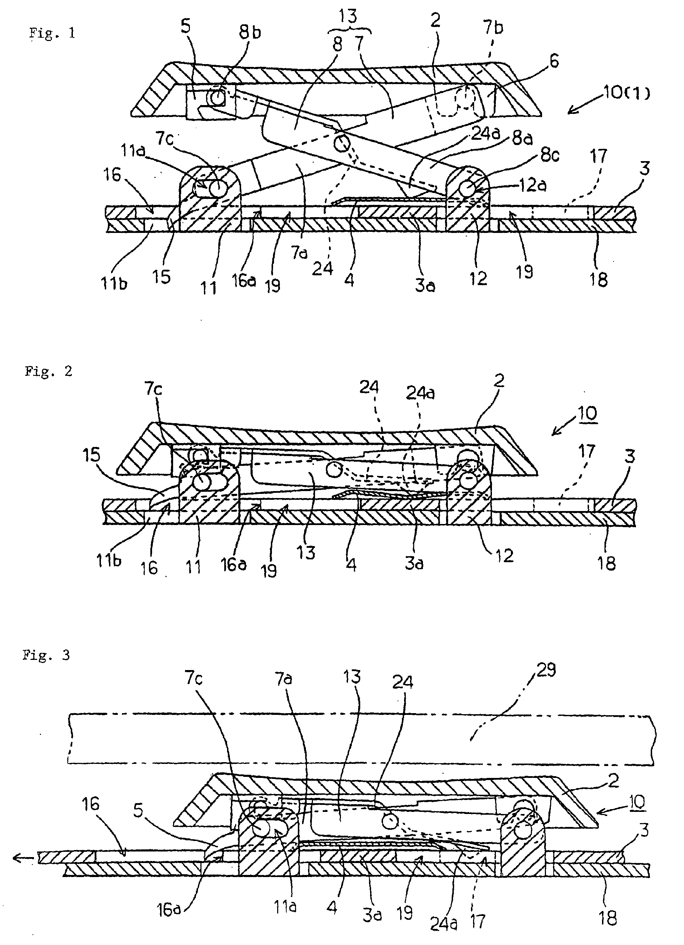

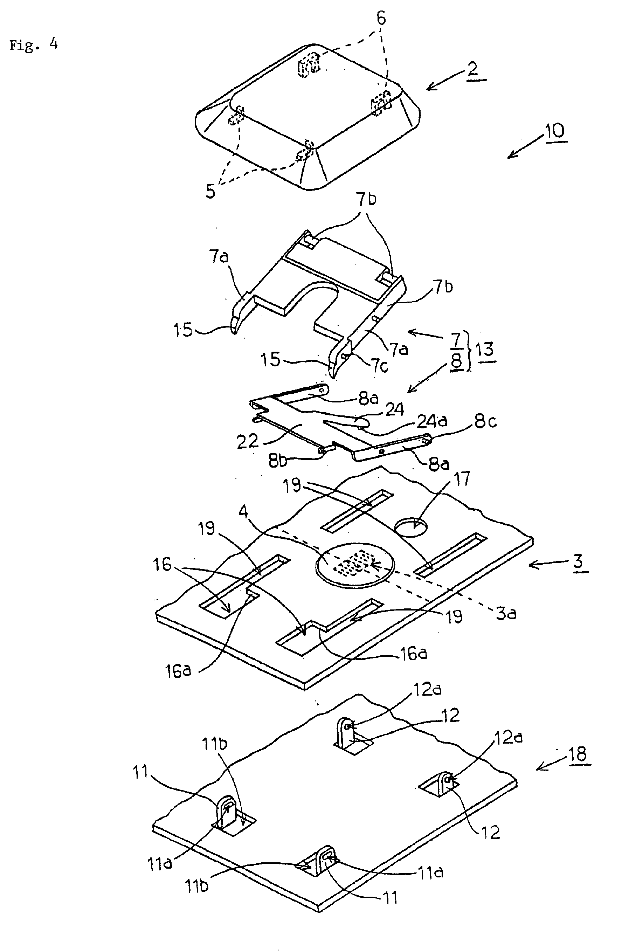

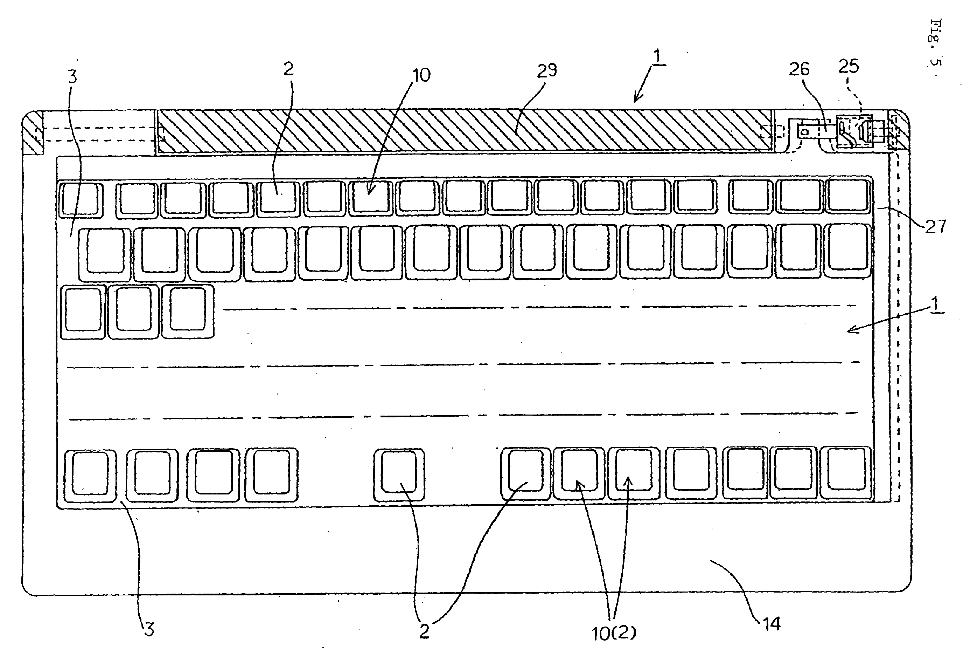

Now, a keyboard switch 1 according to an embodiment of the present invention will be explained with reference to Figs.1 to 6. The keyboard switch 1 according to this embodiment includes a plurality of the key switches 10, shown in Figs.1 to 4, arranged on a support plate 18 formed from metal or synthetic resin board. As shown in Fig.4, each of the key switches 10 includes a key top 2, a cross-link 13, a switch sheet 3 with a membrane switch portion 3a formed thereon, and the support plate 18. The keyboard switch according to this embodiment is used as a key-input device in a notebook personal computer, being attached to a device case 14 for use with a notebook personal computer shown in Fig.5. In a storage orientation when the notebook personal computer is not in service, closing a lid 29 pivotally attached to the device case 14 causes the key top 2 of each of the key switches 10 to be covered therewith.

The key top 2 is a molded part made from synthetic resin such ABS resin. At the rear portion of the bottom side of the key top 2 (on the right in Fig.1), a pair of U-shaped bearing portions 6 for pivotally supporting the rear portion of an inner link 7 is formed integrally with the key top 2. On the other hand, at the front portion (on the left in Fig.1), a pair of guide receiving portions 5 for pivotally and slidably guiding the front portion of an outer link 8 is formed integrally with the key top 2.

The cross-link 13 comprises a set of the inner link 7 and the outer link 8, each made from synthetic resin and provided with parallel arm portions 7a, 8a on the both sides thereof, respectively. The both links are pivotally connected and crossed over to each other at the longitudinally intermediate portions of the arm portions 7a, 8a.

The cross-link 13 is interposed between the bottom side of the key top 2 and support projections 11, 12, which are formed by cutting and erecting part of the support plate 18, with one end of each of the links 7, 8 being mounted as a hinge end portion and the other end as a sliding end portion.

That is, at the rear portion of the inner link 7, a pivot axis 7b for connecting between the arm portions 7a, 7a engages pivotally the U-shaped bearing portions 6 of the key top 2. At the front portion, slidable projections 7c projecting sideward on the arm portions 7a, 7a are loosely fit to long holes 11a bored in front support projections 11. Thus, the inner link 7 is supported pivotally and slidably back and forth. In addition, at the front portion of the outer link 8, slidable projections 8b projecting on the both sides of a connecting plate 22 for connecting the arm portions 8a, 8a to each other engage the guide receiving portions 5 of the key top 2 pivotally and slidably back and forth. At the rear portion, pivot axes 8c projecting sideward on the arm portions 8a, 8a are loosely fit to circular holes 12a bored in rear support projections 12. Thus, the outer link 8 is pivotally supported.

As such, the cross-link 13 is connected between the bottom side of the key top 2 and the support projections 11, 12, which are provided by cutting and erecting part of the support plate 18. The key top 2 is thereby guided freely up and down by means of the cross-link 13, while being kept in a horizontal plane.

The arm portions 7a, 7a of the inner link 7 are continuously provided, at the front portions thereof, with trailing claw pieces 15 in the shape of an arc diagonally below the positions where the arm portions 7a, 7a are supported by the front support projections 11.

Furthermore, the connecting plate 22 of the outer link 8 is continuously provided, at the central portion thereof, with an elongated plate spring piece 24 integrally therewith diagonally downwardly. The plate spring piece 24 is held in a cantilever manner at the rear of the connecting plate 22. At the bottom side of the free end or the lower end, a conical contact portion 24a for elastically contacting with the surface of the switch sheet 3 is formed by embossing.

At the position of the switch sheet 3 with which the contact portion 24a is brought into contact under the stand-by position shown in Fig.1, formed is a switch portion which includes the membrane switch portion 3a and a dish spring 4 placed above the membrane switch portion 3a.

The membrane switch portion 3a includes a movable contact and a stationary contact printed on flexible sheets which are stacked one on the other with an insulating spacer interposed therebetween to allow the sheets to face to each other with a slight gap being left therebetween. The dish spring 4 is made of an elastic metal plate, being formed into the shape of a circular dish while periphery thereof is bent. The periphery of the dish spring 4 is adhered to the flexible sheets, thereby fixedly attached to above the membrane switch portion 3a. As shown in Fig.4, the switch sheet 3 is arranged slidably back and forth relative to the support plate 18 on the support plate 18. There are bored guide slits 19 at the positions where the front support projections 11 and the rear support projections 12 protrude therethrough. This is to allow the switch sheet 3 to slide without interfering with the front support projections 11 and the rear support projections 12, which are formed by cutting and erecting part of the support plate 18. The width of the guide slits 19 is slightly larger than the thickness of the front support projections 11 and the rear support projections 12. The guide slits 19 are given the back-and-forth direction as the longitudinal direction, thereby allowing the switch sheet 3 to be guided by means of the support projections 11, 12 to slide back and forth.

At the inner sides of the guide slits 19 into which the front support projections 11 are inserted, engagement holes 16 for allowing the trailing claw pieces 15 of the inner link 7 to penetrate therethrough are bored continuously to the guide slits 19. When the switch sheet 3 slides forwardly (to a retracted position), the trailing claw pieces 15 are brought into contact with the rear edge 16a of the engagement holes 16 to be pushed upwardly. Then, the trailing claw pieces 15 cause the arm portions 7a, 7a of the inner link 7 to rotate about the slidable projections 7c so as to allow the arm portions 7a, 7a to submerge.

In addition, there is bored a circular retracting hole 17 at a portion of the switch sheet 3 with which the contact portion 24a of the plate spring piece 24 is brought into elastic contact when the switch sheet 3 has slid forwardly into a retracted position. That is, the retracting hole 17 is located at a position a little rearward from the membrane switch portion 3a to accommodate part of the plate spring piece 24 at the retracted position.

The support plate 18 is fixedly accommodated inside the device case 14. Thus, a pair of the aforementioned front support projections 11 and the rear support projections 12 are formed by cutting and erecting part of the support plate 18 for each of the key switches 10 at respective corresponding portions. The distal portions of the trailing claw pieces 15 of the inner link 7 that have penetrated the engagement holes 16 are accommodated, at the stand-by position as shown in Fig.1, in punched holes 11b that are formed by punching the support plate 18 to provide the front support projections 11.

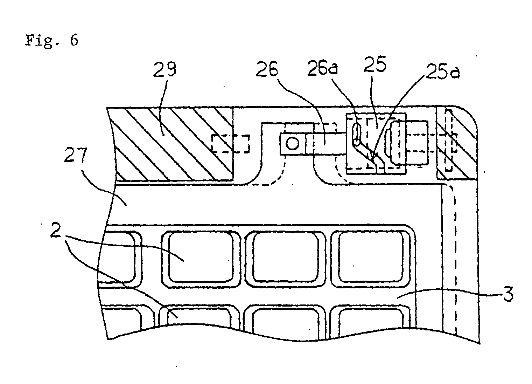

As shown in Figs.5 and 6, the switch sheet 3 is adapted to slide back and forth in response to the opening and closing of the lid by means of a conversion mechanism provided at the connecting portion between the switch sheet 3 and the lid 29 of the device case 14.

The conversion mechanism has a cylindrical cam 25 that rotates integrally with a pivot axis for pivotally supporting the lid 29. The follower 26a of a slider 26 is fit from inside the cylindrical cam 25 into the crank-shaped cam groove 25a that is bored in the cylindrical cam 25. A slide angle 27 formed from a thin metal plate into the shape of an inverted letter L is fixedly attached to the slider 26. The upper and left edges of the switch sheet 3 shown in Fig.5 are fixedly pressed against the bent groove along the inside of the slide angle 27, allowing the flexible switch sheet 3 to slide along with the slide angle. Consequently, when the lid 29 is opened and closed to rotate, the slider 26 reciprocates in a straight line back and forth (in a left-to-right direction in the figure), thus allowing the switch sheet 3 to slide back and forth along with the slider 26.

The operation of the keyboard switch 1 configured as such will be explained below.

Fig.1 shows the stand-by position where the lid 29 is opened and the key top 2 is not depressed, thus showing a state in which an input operation of the key switch is being waited for.

At this stand-by position, the contact portion 24a of the plate spring piece 24 is elastically in contact with the dish spring 4, pushing the outer link 8 upwardly. Consequently, the key top 2 is held at the highest portion by means of the cross-link 13.

Depressing the key top 2 causes the key top 2 to be lowered in a parallel plane by means of the cross-link 13 and the contact portion 24a of the plate spring piece 24 to depress and deform the dish spring 4 as shown in Fig.2. The deformation of the dish spring 4 causes the movable contact of the membrane switch portion 3a to be brought into contact with the stationary contact, thereby activating the switch portion.

Releasing the depression of the key top 2 causes the dish spring 4 to return by its own elasticity, thereby deactivating the switch portion. In addition, the cross-link 13 is energized and pushed upwardly by means of the returning plate spring piece 24, thereby causing the key top 2 to return to the stand-by position of Fig.1.

Closing the lid 29 to accommodate the keyboard switch 1 inside the device case 14 causes the switch sheet 3, which moves leftward along with the slider 26, to slide due to the closing rotation of the lid 29 from the stand-by position shown by the dashed line to the leftmost retracted position shown by the solid line in Fig.5.

At this time, the switch sheet 3 moves leftward relative to the cross-link 13 that is attached to the support plate 18. Accordingly, the switch sheet 3 causes the rear edge 16a of the engagement holes 16 to be brought into contact with the trailing claw pieces 15 and the arm portions 7a of the inner link 7 to rotate in the clockwise direction about the slidable projections 7c in Fig.3. Consequently, the cross-link 13 is submerged and the key top 2 is lowered, thus allowing the whole device case 14, in which the lid 29 covers the key tops 2, to be made smaller in thickness.

At the retracted position of Fig.3, the contact portion 24a of the plate spring piece 24 is accommodated in the retracting hole 17 of the switch sheet 3. Consequently, this allows the plate spring piece 24 to be accommodated inside the device case 14 in a substantially free state. Accordingly, this prevents the plate spring piece 24 from being accommodated while being elastically deformed, thus preventing the occurrence of fatigue or plastic deformation.

Furthermore, the dish spring 4 and the membrane switch portion 3a, which were previously located at the contact portion 24a of the plate spring piece 24, are retracted leftward by the leftward sliding of the switch sheet 3, thereby preventing the switch portion from malfunctioning due to the lowering of the key top 2.

Opening the lid 29 to use the keyboard switch 1 causes the slider 26 and the switch sheet 3 to slide rightward from the retracted position shown by the solid line to the stand-by position shown by the dashed line in Fig.5.

Consequently, this causes the rear edges 16a of the engagement holes 16, which were in contact with the trailing claw pieces 15, to retract rightward to release the restraint on the trailing claw pieces 15. At the same time, the sliding of the switch sheet 3 causes the free end of the plate spring piece 24 to escape from the retracting hole 17, thereby allowing the contact portion 24a to be brought into elastic contact with the upper portion of the switch sheet 3. Consequently, the elasticity of the plate spring piece 24 causes the cross-link 13 to be pushed upward and the key top 2 to return to the stand-by position. Furthermore, the sliding of the switch sheet 3 causes the dish spring 4 and the membrane switch portion 3a to return to under the contact portion 24a of the plate spring piece 24, thus allowing the whole key switch 10 to return to the stand-by position of Fig.1.

The present invention can be modified differently without being limited to the aforementioned embodiment. For example, the present invention is adapted to move the switch sheet 3 by the opening and closing operation of the lid, however, the support plate 18 may be moved relative to the switch sheet. In addition, the plate spring piece 24 that allows the key top 2 to return serves also as an actuator for actuating the switch portion. However, such an actuator as for depressing the switch portion may be provided on the key top 2 or the cross-link 13 separately from the plate spring piece 24 that acts as a return spring.

Furthermore, the aforementioned embodiment employs the dish spring 4 that can be inverted to sustain the actuated operation of the membrane switch portion 3a. It is not always necessary to provide the dish spring 4 at the switch portion.

Still furthermore, the aforementioned embodiment employs the cylindrical cam 25 and the slider 26 as an interlock mechanism for allowing the switch sheet to slide along with the opening and closing of the lid. However, other interlock mechanism with a bevel gear or the like may be employed.

As described in the foregoing, according to the present invention, when the key top 2 is accommodated inside the device case 14, the plate spring piece 24 can be retracted to under the key top 2 in a substantially free state, thereby providing a long life to the keyboard switch.

In addition, when the keyboard switch is accommodated inside the device case 14, the key top 2 can be kept in a lowered state using the switch sheet 3 that slides or the support plate 18 without the need for providing a special complicated structure. Accordingly, this prevents the key top 2 from interfering with the closed lid 29, thereby preventing a liquid crystal display to be disposed on the reverse side of the lid 29 from being damaged and conversely, preventing the key top 2 from being damaged by the lid 29.

Furthermore, the return spring serves also as an actuator for depressing and actuating the switch portion, thereby reducing the number of parts used and simplifying the structure of the keyboard switch.

Furthermore, only sliding the switch sheet can retract the return spring, thus allowing the lid to be opened or closed with a small amount of force.

Still furthermore, the switch sheet can be guided in the direction of sliding without providing a separate guide member.

As described above, the keyboard switch according to the present invention can be used as an input device to be employed in a portable electronics device, which needs to be reduced in thickness, such as a notebook personal computer or a portable telephone set.

While there has been described what are at present considered to be preferred embodiments of the invention, it will be understood that various modifications may be made thereto, and it is intended that the appended claims cover all such modifications as fall within the true spirit and scope of the invention.

## Claims

1. A keyboard switch comprising :
a support plate (18) accommodated inside a device case (14),
a cross-link (13), mounted between support projections (11), (12) of said support plate (18) and a key top (2), for guiding said key top (2) freely up and down,
a switch sheet (3), arranged slidably on said support plate (18) to avoid colliding with said support projections (11), (12) and provided with a switch portion (3a), formed thereon and actuated by said key top (2) lowered,
a return spring (24), attached integrally to said key top (2) or said cross-link (13), in contact with said switch sheet (3), for returning said lowered key top (2) upwardly, and
an interlock mechanism (25), (26) for sliding relatively one of said switch sheet (3) and said support plate (18) relative to the other from a stand-by position to a retracted position in response to a closing operation of a lid (29) covering said key top (2) and for sustaining said key top (2) in a lowered state,
said keyboard switch being for sliding said switch portion (3a) actuated by lowering said key top (2) at said stand-by position to said retracted position where said switch portion (3a) is not actuated by lowering said key top (2), wherein
at the retracted position, a retracting hole (17) is formed at a portion of said switch sheet (3) with which said return spring (24) is in contact, and part of said return spring (24) is accommodated inside said retracting hole (17).

2. The keyboard switch according to claim 1, wherein engagement holes (16) into which trailing claw pieces (15) integrally provided on said cross-link (13) are inserted are formed on said switch sheet (3), and when one of said switch sheet (3) and said support plate (18) slides to said retracted position, peripheral edges (16a) of said engagement holes (16) moving relatively are brought into contact with said trailing claw pieces (15) to cause said cross-link (13) to submerge and said key top (2) to be lowered.

3. The keyboard switch according to claim 1, wherein said return spring (24) is an elongated plate spring supported in a cantilever manner by means of said key top (2) or said cross-link (13), and a free end (24a) of said return spring (24) located at said stand-by position presses said switch portion (3a) of said switch sheet (3) by lowering said key top (2) to actuate said switch portion (3a).

4. The keyboard switch according to claim 2, wherein said return spring (24) is an elongated plate spring supported in a cantilever manner by means of said key top (2) or said cross-link (13), and a free end (24a) of said return spring (24) located at said stand-by position presses said switch portion (3a) of said switch sheet (3) by lowering said key top (2) to actuate said switch portion (3a).

5. The keyboard switch according to any one of claims 1 to 4, wherein said switch sheet (3) slides between said stand-by position and said retracted position relative to said support plate (18) in response to opening and closing of said lid (29).

6. The keyboard switch according to claim 5, wherein slits (19) having a sliding direction as a longitudinal direction is formed on said switch sheet (3), and said support projections (11), (12) of said support plate (18) are loosely fit into said slits (19) to allow said switch sheet (3) to be guided to slide by means of said support projections (11), (12).
